# EUROPÄISCHE PATENTSCHRIFT

(11) **EP 0 626 328 B1**
(45) Veröffentlichungstag und Bekanntmachung des Hinweises auf die Patenterteilung: **04.06.1997**
(21) Anmeldenummer: 94103695.6
(22) Anmeldetag: 10.03.1994
(51) Int. Cl.: B65G 57/00, B65G 59/00

(54) **Vorrichtung zur Bildung einer Trennschicht zwischen einzelnen keramischen Formkörpern**
Device for forming an intermediate layer between single ceramic bodies
Dispositif pour former une couche intermédiaire entre corps céramiques séparés

(30) Priorität: 14.05.1993 DE 4316264
(43) Veröffentlichungstag der Anmeldung: 30.11.1994
(73) Patentinhaber: Michael Voit GmbH, D-95163 Weissenstadt (DE)
(72) Erfinder: Voit, Karl, Dipl.-Ing. (FH), D-95163 Weissenstadt (DE)
(74) Vertreter: Hering, Hartmut, Dipl.-Ing.

(56) Entgegenhaltungen:
- DE-A- 3 303 307
- DE-A- 3 924 356
- PATENT ABSTRACTS OF JAPAN vol. 4, no. 94 (M-19) (576) 8. Juli 1980 & JP-A-55 052 822 (BUNSHIYOUDOU)

## Beschreibung

Die Erfindung befaßt sich mit einer Vorrichtung zur Bildung einer Trennschicht zwischen einzelnen keramischen Formkörpern beim Stapeln von ungeschliffener Ton- und Porzellanware, wie Teller, Platten oder dergleichen (Flachgeschirr), mit runder und/oder eckiger und/oder ovaler Gestalt, mit einer Vorrichtung zum Aufbringen der Trennschicht beim Stapelaufbau und einer Düse zum Entfernen der Trennschicht beim Stapelabbau. Eine derartige Vorrichtung ist aus der DE-A-39 24 356 bekannt.

Ton- und Porzellanwaren werden nach dem Glattbrand aus den verschiedenen Typen von Brennöfen entnommen und zu Stößen gestapelt. Gerade bei Flachware, wie z. B. Tellern, Platten und dergleichen ist es nun so, daß der rauhe, noch ungeschliffene Fuß des Artikels bei der Stoßbildung bzw. Stapelbildung auf die glasierte Fläche des darunterliegenden Artikels gestellt wird. Durch leichtes Verschieben oder Rütteln, besonders hervorgerufen durch die Transportsysteme zu den anschließenden Bearbeitungseinrichtungen, wird die glasierte Fläche des glattgebrannten Artikels zerkratzt. Zerkratzte Glasurflächen haben eine Qualitätsminderung zur Folge. Um dies zu vermeiden, legt man bei der Stoßbildung von Hand ein Papier zwischen jeden einzelnen Artikel. Bei der nachfolgenden Weiterverarbeitung werden die Papiereinlagen wieder von Hand entnommen und in Lagerboxen gegeben. Durch die konkave Form der Artikel wird die Papiereinlage zerknittert, so daß ein automatisches Einlegen zwischen den einzelnen Artikeln nicht möglich ist.

Es gibt zwar automatische Papiereinlegegeräte, die aber nur mit neugeschnittenen und in Magazinen gespeicherten Papiereinlagen funktionieren. Nach der Entnahme ist - wie bereits erwähnt - die Papiereinlage zerknittert und kann der Einlegevorrichtung nicht mehr zugeführt werden. Dieses Papier wandert dann in die Altpapierlager. Das kann in heutiger Zeit aus wirtschaftlichen Gründen und im Hinblick auf den Umweltschutz nicht mehr verantwortet werden.

Bei einer Stoßbildung bzw. Stapelbildung kann ein Zerkratzen der glasierten Flächen von Ton- und Porzellanwaren oder dergleichen durch die Berührung des ungeschliffenen Fußes mit der glasierten Fläche des darunter liegenden Artikels, insbesondere Teller, Platten oder dergleichen, auftreten.

Bei den bisherigen Tunnelöfen ist die gebrannte Ware auf dem Tunnelofenbrennwagen verblieben und mit dem Brennwagen auf Speichergleise umgestellt worden.

Die Kapazität der Öfen von 7 Tagen Dreischichtbetrieb wurde dann in der normalen Arbeitszeit in 5 Tagen entleert und beladen. Der Grund hierfür war der hohe Personalaufwand für die weitere Verarbeitung der Ware und die noch hohe Temperatur der Brennwagen beim Verlassen der Brennöfen.

Die neue Brenntechnik - Schnellbrandofen (Schlittenofen), Rollendurchlaufofen - die im Umlaufsystem betrieben wird, hat zur Folge, daß von den umlaufenden Brenntischen im Dreischichtbetrieb die Ton- und Porzellanwaren be- und entladen werden müssen. Es ist somit erforderlich, die glattgebrannte Ware zu stapeln und zu puffern, um sie dann im Einschichtbetrieb wirtschaftlich bearbeiten zu können.

Das Befüllen und Entleeren der Brenntische erfolgt heute schon automatisch, so daß in diesem Bereich nur eine Aufsichtsperson notwendig ist. Da für die weitere Bearbeitung der Personalaufwand sehr hoch ist und bis heute noch keine brauchbare Automatisierung vorhanden ist, muß die glattgebrannte Ware gestapelt und gepuffert werden, um sie dann im Einschichtbetrieb wirtschaftlich weiter zu bearbeiten.

Die Erfindung zielt darauf ab, unter Überwindung der zuvor geschilderten Schwierigkeiten eine Vorrichtung zur Bildung einer Trennschicht zwischen einzelnen keramischen Formkörpern der gattungsgemäßen Art bereitzustellen, welche ein Zerkratzen von glasierten und glattgebrannten keramischen Formkörpern verhindert, wenn diese beim Stapeln zur Stoßbildung übereinander gestapelt werden. Ferner soll die Vorrichtung eine Automatisierung der Produktionsabläufe auf zuverlässige und wirtschaftliche Weise gestatten.

Nach der Erfindung zeichnet sich eine Vorrichtung zur Bildung einer Trennschicht zwischen einzelnen keramischen Formkörpern beim Stapeln von ungeschliffener Ton- und Porzellanware, wie Teller, Platten oder dergleichen (Flachgeschirr), mit runder und/oder eckiger und/oder ovaler Gestalt, mit einer Vorrichtung zum Aufbringen der Trennschicht beim Stapelaufbau und einer Düse zum Entfernen der Trennschicht beim Stapelabbau aus durch eine Dosiervorrichtung zum Aufstreuen kleiner Trennblättchen auf einen mit der Trennschicht zu versehenden Formkörper und eine Saugdüse, die beim Stapelabbau die die Trennschicht bildenden Trennblättchen entfernt und diese Trennblättchen über einen Empfangsbehälter zur Aufnahme der Trennblättchen zur Nachfüllung der Dosiervorrichtung zurückführt.

Die Vorrichtung nach der Erfindung arbeitet nach einem kontinuierlichen Arbeitsprinzip zwischen der Stoßbildung bzw. dem Stapelaufbau und dem Stoßabbau bzw. Stapelabbau. Sie arbeitet vollautomatisch und die die Trennschicht bildenden Trennblättchen, welche einen Kratzschutz bilden, werden in einem geschlossenen Kreislauf zur Wiederverwendung gefördert. Diese Vorrichtung ist insbesondere im Zusammenhang mit den heutzutage eingesetzten Schnellbrandöfen von großem Vorteil. Ferner läßt sich auf diese Weise ohne jegliche qualitative Einbuße das keramische Gut handhaben und es lassen sich unter Automatisierung des Produktionsablaufes qualitativ hochwertige Waren herstellen.

Nach der Erfindung wird das Zerkratzen von glasierten und glattgebrannten Ton- und Porzellanwaren, wie z. B. Teller, Platten oder dergleichen, durch eine Zwischenlage von kleinen Blättchen aus nicht statisch aufladbarem Werkstoff, wie z. B. Silikon, silikonbeschichtetes Papier oder dergleichen, vermieden.

In einem Vorratsbehälter befinden sich kleine Blättchen, die in Form und Werkstoff frei wählbar gestaltet werden können. Eine an diesem Vorratsbehälter angebrachte Dosiervorrichtung dosiert die Blättchen flächenförmig in die stets konkave Form der Teller, Platten oder dergleichen. Die Größe der Fläche, die von den Blättchen abgedeckt wird, ist immer großer als die Standfläche (Tellerfuß) des darauf abzustellenden Artikels.

Die Dosiervorrichtung kann zentral über dem zu bildenden Stoß angeordnet sein. Sie kann auch an der Umsetzeinrichtung, die z. B. den auf einem Band zugeführten Artikel aufnimmt und zur Stoßbildung übersetzt, montiert sein. Der dann neu auf die stoßbildende Einheit abgesetzte Artikel wird dann von der Dosiervorrichtung mit Blättchen abgedeckt und hat somit eine Schutzschicht zu dem nachfolgenden Artikel erhalten. Ist die Stoßeinheit dann gebildet, wandert der Stoß einer Pufferung zu und eine neue Stoßbildung kann begonnen werden.

Je nach Anlage laufen die gepufferten Stöße den weiteren Bearbeitungsmaschinen zu. An dieser Stelle erfolgt nun der Abbau des Stoßes. Die Artikel werden hier einzeln den Bearbeitungsmaschinen zugeführt.

Bevor eine Umsetzeinrichtung einen Artikel vom Stoß aufnimmt, um ihn der Maschine zu übergeben, wird mit einer Absaugvorrichtung die aus den Blättchen geschaffene Trennschicht abgesaugt. Ein Pneumatikförderer fördert die abgesaugten Plättchen zu einem Empfangsbehälter. In diesem Empfangsbehälter werden die Blättchen von der Förderluft getrennt und im Sammelbehälter gespeichert.

Dieser Empfangsbehälter ist in der Lage, die Trennblättchen von mehreren Stoßabbaueinrichtungen gleichzeitig aufzunehmen.

Von den gemeinsamen kombinierten Empfangs- und Speicherbehältern können nach dem gleichen Prinzip eine oder mehrere Dosiervorrichtungen mit Trennblättchen versorgt werden.

Wie aus der Beschreibung der Anlage hervorgeht, handelt es sich um eine einfach und kontinuierlich arbeitende Anlage. Sie ist ein wesentlicher Schritt in der Automatisierung zwischen der Entleerung der Brennöfen und der Weiterverarbeitung der Artikel.

Vorteilhafte Ausgestaltungen der erfindungsgemäßen Vorrichtung sind in den Ansprüchen 2 bis 14 wiedergegeben, und durch diese Bezugnahme gehören alle die dort angegebenen Einzelheiten voll inhaltlich zum Offenbarungsgehalt der vorliegenden Anmeldung.

Die Erfindung wird nachstehend anhand von bevorzugten Ausführungsformen unter Bezugnahme auf die beigefügte Zeichnung näher erläutert. Darin zeigt:
Figur 1 eine schematische Seitenansicht einer Einzelvorrichtung zur Trennschichtaufgabe und -absaugung,
Figur 2 eine schematische Seitenansicht einer Doppel- oder Mehrfachvorrichtung zur Trennschichtaufgabe und Trennschichtabsaugung, und
Figur 3 eine schematische, als Schnittzeichnung dargestellte Dosiervorrichtung für die Aufgabe der Trennschicht (Trennblättchen).

Die Vorrichtung nach der Erfindung wird nachstehend unter Bezugnahme auf die beigefügte Zeichnung im Zusammenhang mit ihrer Funktionsweise näher erläutert.

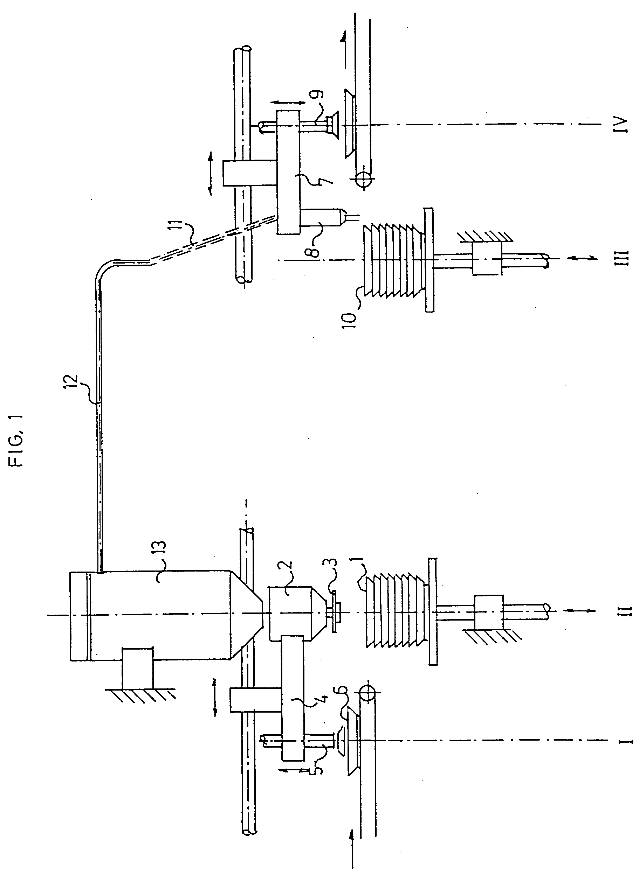

Zuerst wird die Funktionsweise der in Figur 1 gezeigten Vorrichtung bezüglich der Stoßbildung bzw. des Stapelaufbaus und des Stoßabbaus bzw. des Stapelabbaus näher erläutert.

### Stoßbildung

Ein Teller 1 wird vom Vorratsbehälter 2 über eine vibrierende Zuteilscheibe 3 mit Trennblättchen bestreut. Nach der Bestreuung von Teller 1 fährt ein gemeinsamer Aufnahmearm 4, an dem ein Vorratsbehälter 2 sowie eine Telleraufnahmeeinrichtung 5 befestigt sind, von Pos. I nach Pos. II. Nach Abstellen eines Tellers 6 auf den Teller 1 in Pos. II fährt der gemeinsame Aufnahmearm 4 in Pos. I zurück, so daß eine Dosiervorrichtung 3 sich wieder über Pos. II befindet und sodann der Teller 6 in Pos. II mit Trennblättchen bestreut wird.

Die Dosiervorrichtung 3 kann auch getrennt vom gemeinsamen Aufnahmearm 4 über Pos. II stationär angeordnet sein.

### Stoßabbau

Ein gemeinsamer Aufnahmearm 7, an dem eine Saugdüse 8 und eine Telleraufnahmeeinrichtung 9 befestigt sind, fährt von Pos. IV nach Pos. III. Während dem Überstreichen der Saugdüse 8 über den Teller 10 werden die Trennblättchen abgesaugt und gelangen durch pneumatische Förderung über einen Saugschlauch 11 und ein Förderrohr 12 zu einem Empfangsbehälter 13. Dort werden die Trennblättchen gespeichert und je nach Bedarf an den Vorratsbehälter 2 abgegeben.

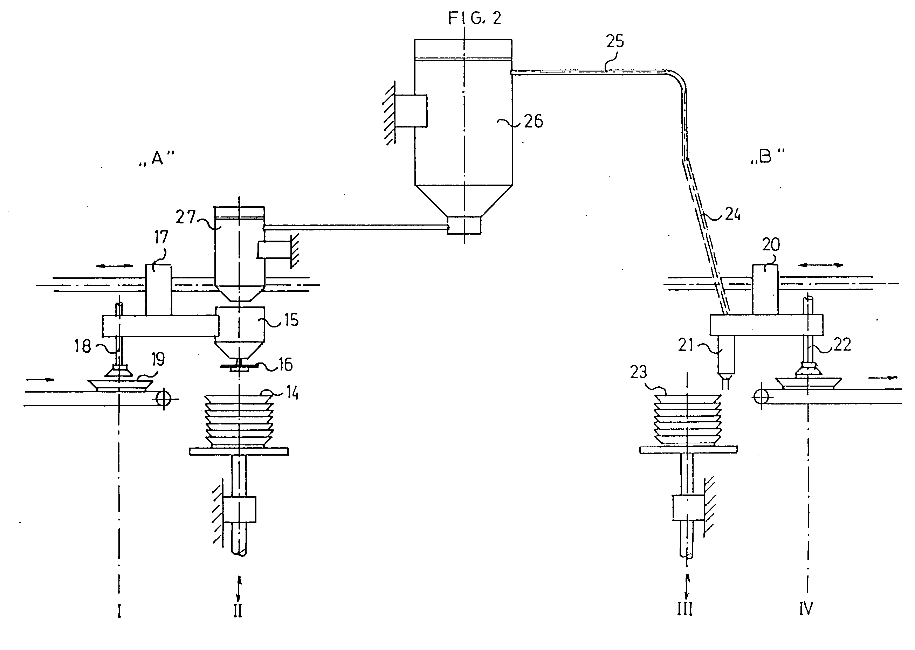

Eine weitere Ausführungsform einer erfindungsgemäßen Vorrichtung wird im Zusammenhang mit dem Funktionsablauf von Stoßbildung und Stoßabbau nachstehend unter Bezugnahme auf Figur 2 näher erläutert.

### Stoßbildung

Ein Teller 14 wird von einem Vorratsbehälter 15 über eine vibrierende Zuteilscheibe 16 mit Trennblättchen bestreut. Nach der Bestreuung von Teller 14 fährt ein gemeinsamer Aufnahmearm 17, an dem der Vorratsbehälter 15 sowie eine Telleraufnahmeeinrichtung 18 befestigt sind, von Pos. I nach Pos. II. Nach Abstellen von Teller 19 auf dem Teller 14 in Pos. II fährt der gemeinsame Aufnahmearm 17 in Pos. I zurück, so daß die als Dosiervorrichtung dienende Zuteilscheibe 16 sich wieder über Pos. II befindet und sodann der Teller 14 in Pos. II mit Trennblättchen bestreut wird.

Die als Dosiervorrichtung dienende Zuteilscheibe 16 kann auch getrennt vom gemeinsamen Aufnahmearm 17 über Pos. II stationär angeordnet sein.

### Stoßabbau

Ein gemeinsamer Aufnahmearm 20, an dem eine Saugdüse 21 sowie eine Telleraufnahmeeinrichtung 22 befestigt sind, fährt von Pos. IV nach Pos. III. Während dem Überstreichen der Saugdüse 21 über den Teller 23 werden die Trennblättchen abgesaugt und gelangen durch pneumatische Förderung über einen Saugschlauch 24 und ein Förderrohr 25 zu einem Zentralempfangsbehälter 26. Dort werden die Trennblättchen gespeichert und je nach Bedarf an einen oder jeden Empfangsbehälter 27 abgegeben. Der Zentralempfangsbehälter 26 ist in der Lage, die Trennblättchen mehrerer Stoßbildungsstationen "A" zu versorgen und gleichzeitig die abgesaugten Trennblättchen von mehreren Stoßabbaustationen "B" aufzunehmen.

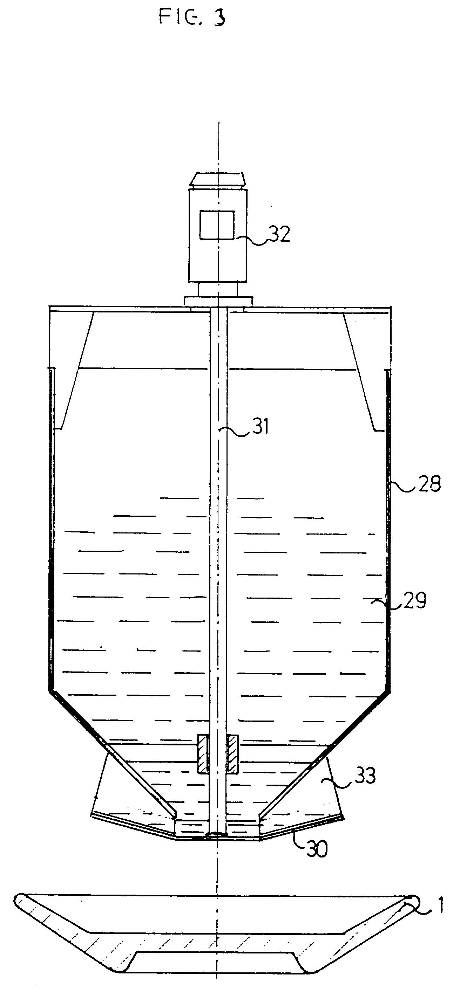

Anhand von Figur 3 wird eine bevorzugte Ausführungsform einer Dosiervorrichtung näher erläutert.

Die hier dargestellte Dosiervorrichtung besteht aus einem Behälter 28 für die Aufnahme der Trennblättchen 29. Eine sich drehende Verteilerscheibe 30, die mit einer Antriebswelle 31 und einem Getriebemotor 32 eine Einheit darstellt, streut die Trennblättchen 29 über den Rand der Scheibe 30 in den darunter befindlichen Artikel und schafft somit eine Trennschicht. Einige am Umfang des Behälters 28 befestigte spiralenförmige Abstreifer 33 fördern die Trennblättchen 29 von der Öffnung in der Mitte des Behälters 28 zum Rand der Verteilerscheibe 30 und ermöglichen somit eine genaue Dosierung der Trennblättchen 29 für die pro Artikel notwendige Trennschicht.

## Patentansprüche

1. Vorrichtung zur Bildung einer Trennschicht zwischen einzelnen keramischen Formkörpern beim Stapeln von ungeschliffener Ton- und Porzellanware, wie Teller, Platten oder dergleichen (Flachgeschirr), mit runder und/oder eckiger und/oder ovaler Gestalt, mit einer Vorrichtung (3; 16) zum Aufbringen der Trennschicht beim Stapelaufbau und einer Düse (8; 21) zum Entfernen der Trennschicht beim Stapelabbau, **gekennzeichnet** durch eine Dosiervorrichtung (3; 16), die kleine Trennblättchen (29) auf einen mit der Trennschicht zu versehenden Formkörper aufstreut und durch eine Saugdüse (8; 21), die beim Stapelabbau die die Trennschicht bildenden Trennblättchen (29) entfernt und diese Trennblättchen (29) über einen Empfangsbehälter (13; 26; 27; 28) zur Aufnahme der Trennblättchen (29) zur Nachfüllung der Dosiervorrichtung (3; 16) zurückführt.

2. Vorrichtung nach Anspruch 1, **dadurch gekennzeichnet,** daß die Trennblättchen (29) mittels einer Zuteilscheibe (3; 16), die mit einem Vibrator versehen ist, dem keramischen Formkörper (1) dosiert zuführbar sind.

3. Vorrichtung nach Anspruch 2, **dadurch gekennzeichnet,** daß die Form der Zuteilscheibe (3; 16) an die Form des keramischen Formkörpers angepaßt ist.

4. Vorrichtung nach Anspruch 1, **dadurch gekennzeichnet,** daß die Trennblättchen (29) mittels einer sich drehenden Verteilerscheibe (30) dem keramischen Formkörper (1) dosiert zuführbar sind.

5. Vorrichtung nach Anspruch 4, **dadurch gekennzeichnet,** daß der Verteilerscheibe (30) spiralenförmige Abstreifer (33) zugeordnet sind.

6. Vorrichtung nach einem der Ansprüche 2 bis 5, **dadurch gekennzeichnet,** daß die Zuteilscheibe (3; 16) bzw. die Verteilerscheibe (30) und ein zugeordneter Vorratsbehälter (2) fest und zentrisch über dem Stapel aus keramischen Formkörpern (1) angeordnet sind.

7. Vorrichtung nach einem der Ansprüche 2 bis 5, **dadurch gekennzeichnet,** daß die Zuteilscheibe (3; 16) bzw. die Verteilerscheibe (30) und ein zugeordneter Vorratsbehälter (2) in Verbindung mit einem Aufnahmearm (4) und einer Telleraufnahmeeinrichtung (5) verschiebbar angeordnet sind.

8. Vorrichtung nach einem der vorangehenden Ansprüche, **dadurch gekennzeichnet,** daß die Saugdüse (8; 21) in Verbindung mit einem Aufnahmearm (7) verschiebbar angeordnet ist.

9. Vorrichtung nach einem der Ansprüche 1 bis 7, **dadurch gekennzeichnet,** daß die Saugdüse (8; 21) und eine Telleraufnahmeeinrichtung (9) in Verbindung mit einem gemeinsamen Aufnahmearm (7) verschiebbar angeordnet sind.

10. Vorrichtung nach Anspruch 8 oder 9, **dadurch gekennzeichnet,** daß die Saugdüse (8; 21) und ein Förderrohr (12; 25) mit einem beweglichen Saugschlauch (11; 24) verbunden sind.

11. Vorrichtung nach Anspruch 10, **dadurch gekennzeichnet,** daß die Saugdüse (8; 21), der Saugschlauch (11; 24) und das Förderrohr (12; 25) eine Absaugeinrichtung bilden, die mit einem Pneumatikförderer und dem Empfangsbehälter (13; 26; 27; 28) verbunden ist.

12. Vorrichtung nach Anspruch 11, **dadurch gekennzeichnet,** daß die Absaugeinrichtung umfassend die Saugdüse (8; 21), den Saugschlauch (11; 24) und das Förderrohr (12; 25) mit dem Pneumatikförderer und einem Zentralempfangsbehälter (26) verbunden ist.

13. Vorrichtung nach Anspruch 12, **dadurch gekennzeichnet,** daß an den Pneumatikförderer und den Zentralempfangsbehälter (26) mehrere Stapelabbau-Stationen (B) mit jeweils einer Saugdüse (21) angeschlossen sind.

14. Vorrichtung nach Anspruch 12 oder 13**, dadurch gekennzeichnet,** daß der Pneumatikförderer und der Zentralempfangsbehälter (26) mehrere Stapelaufbau-Stationen (A) mit jeweils einem Empfangsbehälter (27) mit Trennblättchen (29) beschicken.

## Claims

1. Device for forming a partition layer between individual ceramic moulded bodies when stacking unpolished earthenware and porcelain ware, such as dishes, plates or the like (shallow crockery), having round and/or square and/or oval shape, having a device (3; 16) for applying the partition layer during construction of a stack and a nozzle (8; 21) for removing the partition layer during construction of a stack, characterised by a metering device (3; 16), which sprinkles the small separating sheets (29) onto a moulded body to be provided with the partition layer, and by a suction nozzle (8; 21) which removes the separating sheets (29) forming the partition layer during construction of a stack and returns these separating sheets (29) for refilling the metering device (3; 16) via a receiver container (13; 26; 27; 28) for receiving the separating sheets (29).

2. Device according to claim 1, characterised in that the separating sheets (29) can be supplied in metered manner to the ceramic moulded body (1) by means of a distributor disc (3; 16) which is provided with a vibrator.

3. Device according to claim 2, characterised in that the shape of the distributor disc (3; 16) is matched to the shape of the ceramic moulded body.

4. Device according to claim 1, characterised in that the separating sheets (29) can be supplied in metered manner to the ceramic moulded body (1) by means of a rotating allocator disc (30).

5. Device according to claim 4, characterised in that helical wipers (33) are assigned to the allocator disc (30).

6. Device according to one of claims 2 to 5, characterised in that the distributor disc (3; 16) or the allocator disc (30) and an assigned stock container (2) are arranged fixedly and centrally over the stack of ceramic moulded bodies (1).

7. Device according to one of claims 2 to 5, characterised in that the distributor disc (3; 16) or the allocator disc (30) and an assigned stock container (2) are arranged to be displaceable in conjunction with a receiver arm (4) and a dish receiver device (5).

8. Device according to one of the preceding claims, characterised in that the suction nozzle (8; 21) is arranged to be displaceable in conjunction with a receiver arm (7).

9. Device according to one of claims 1 to 7, characterised in that the suction nozzle (8; 21) and a dish receiver device (9) are arranged to be displaceable in conjunction with a common receiver arm (7).

10. Device according to claim 8 or 9, characterised in that the suction nozzle (8; 21) and a conveying pipe (12; 25) are connected by a movable suction hose (11; 24).

11. Device according to claim 10, characterised in that the suction nozzle (8; 21), the suction hose (11; 24) and the conveying pipe (12; 25) form a suction device which is connected to a pneumatic conveyer and the receiver container (13; 26; 27; 28).

12. Device according to claim 11, characterised in that the suction device comprising the suction nozzle (8; 21), the suction hose (11; 24) and the conveying pipe (12; 25) is connected to the pneumatic conveyer and a central receiver container (26).

13. Device according to claim 12, characterised in that several stack construction stations (B) each having a suction nozzle (21) are connected to the pneumatic conveyer and the central receiver container (26).

14. Device according to claim 12 or 13, characterised in that the pneumatic conveyer and the central receiver container (26) charge several stack construction stations (A), each having a receiver container (27), with separating sheets (29).

## Revendications

1. Dispositif pour former une couche de séparation entre des corps individuels en céramique, dans une pile d'articles en terre cuite et en porcellaine, tels qu'assiettes, plats, etc., (vaisselle plate), de forme ronde et/ou anguleuse et/ou ovale, en utilisant un dispositif de réglage (3; 16) pour, à l'empilage, l'application de la couche de séparation et une tuyère d'aspiration (8; 21) pour, au désempilage, écarter la couche de séparation, caractérisé par un dispositif de réglage (3; 16) destiné à répandre les petites feuilles de séparation (29) sur un corps profilé à munir de la couche de séparation et par une tuyère d'aspiration (8; 21) qui, au désempilage, écarte les feuilles de séparation qui forment la couche de séparation et renvoie ces feuilles de séparation (29) à un conteneur de réception (13; 26; 27; 28) pour recevoir les feuilles de séparation (29) destinées au remplissage du dispositif de réglage (3; 16).

2. Dispositif suivant la revendication 1, caractérisé en ce que les feuilles de séparation (29), au moyen d'un disque de distribution (3; 16) qui est muni d'un vibrateur, peuvent être distribuées et dosées au corps profilé en céramique (1).

3. Dispositif suivant la revendication 2, caractérisé en ce que la forme du disque de distribution (3; 16) est adaptée à la forme deu corps profilé en céramique.

4. Dispositif suivant la revendication 1, caractérisé en ce que les feuilles de séparation (29), au moyen d'un disque de répartition (30) qui tournent, peuvent être distribuées et dosées au corps profilé en céramique (1).

5. Dispositif suivant la revendication 4, caractérisé en ce que les disques de répartition (30) sont disposés en racleur (33) en forme de spirale.

6. Dispositif suivant l'une des revendications 2 à 5, caractérisé en ce que le disque de distribution (3; 16) ou les disques de répartition (30) et un conteneur de réserve (2) sont prévus fixes et centrés sur la pile de corps profilés (1) en céramique.

7. Dispositif suivant l'une des revendications 2 à 5, caractérisé en ce que le disque de distribution (3; 16) ou les disques de répartition (30) et un conteneur de réserve (2) sont prévus déplaçables en liaison avec un bras de réception (4) et un appareil de réception d'assiettes (5).

8. Dispositif suivant l'une des revendications précédentes, caractérisé en ce que la tuyère d'aspiration (8; 21) est prévue déplaçable en liaison avec un bras de réception (7).

9. Dispositif suivant l'une des revendications 1 à 7, caractérisé en ce que la tuyère d'aspiration (8; 21) et un appareil de réception d'assiettes (9) sont disposés déplaçables en liaison avec un bras de réception (7).

10. Dispositif suivant la revendication 8 ou 9, caractérisé en ce que la tuyère d'aspiration (8; 21) et un tube transporteur (12; 25) sont reliés par un tuyau d'aspiration (11; 24).

11. Dispositif suivant la revendication 10, caractérisé en ce que la tuyère d'aspiration (8; 21), le tuyau d'aspiration (11; 24) et le tube transporteur (12; 25) forment un dispositif aspirateur qui est relié à un transporteur pneumatique et au conteneur de réception (13; 26; 27; 28).

12. Dispositif suivant la revendication 11, caractérisé en ce que le dispositif aspirateur comprenant la tuyère d'aspiration (8; 21), le tuyau d'aspiration (11; 24) et le tube transporteur (12; 25) est relié au transporteur pneumatique et à un conteneur de réception cental (26).

13. Dispositif suivant la revendication 12, caractérisé en ce qu'au transporteur pneumatique et au conteneur de réception central (26), sont fixés plusieurs postes de désempilage (B) qui ont chacun une tuyère d'aspiration (21).

14. Dispositif suivant la revendication 12 ou 13, caractérisé en ce que le transporteur pneumatique et le conteneur de réception central (26) chargent plusieurs postes d'empilage (A) qui ont chacun un conteneur de réception (27) des feuilles de séparation (29).
